# EUROPÄISCHE PATENTANMELDUNG

(11) **EP 1 258 463 A2**
(43) Veröffentlichungstag der Anmeldung: **20.11.2002**
(21) Anmeldenummer: 02007891.1
(22) Anmeldetag: 09.04.2002
(51) Int. Cl.: C04B 16/08, C04B 40/00

(54) **Verfahren zur Herstellung von wärmedämmendem Leicht- und Dämmputz**

(30) Priorität: 17.05.2001 DE 10123908
(71) Anmelder: BASF AKTIENGESELLSCHAFT, 67056 Ludwigshafen (DE)
(72) Erfinder: Liene, Werner, 68219 Mannheim (DE); Riethues, Michael, Dr., 67071 Ludwigshafen (DE); Schleier, Gisbert, Dr., 69121 Heidelberg (DE); Keller, Andreas, 67459 Böhl-Iggelheim (DE)

(57) **Zusammenfassung**

Die Erfindung betrifft ein Verfahren zur Herstellung von wärmedämmendem Leichtputz durch Vermischen von hydraulischen Bindemitteln und Schaumpolystyrol-Partikel, wobei die Bindemittel vor oder nach dem Vermischen mit den Schaumpartikeln auf Temperaturen oberhalb von 50° C erhitzt werden.

## Beschreibung

Die Erfindung betrifft ein Verfahren zur Herstellung wärmedämmendem Leicht- und Dämmputz auf Basis von hydraulischen Bindemitteln und Zuschlägen aus Schaumpolystyrol-Partikeln.

Dämmputz wird zum Verputzen von Gebäudeaußenwänden verwendet. Infolge des hohen Gehalts an Schaumpartikeln (etwa 70 bis 95 Vol.%) ergibt er eine sehr gute Wärmedämmung. Die Trockenmischung hat eine Rohdichte von 250 bis 400 kg/m³.

Bei Leichtputz steht weniger die Wärmedämmung im Vordergrund, sondern vielmehr die gute Verarbeitbarkeit und geringe Rißanfälligkeit des Putzes. Hier genügen 30 bis 50 Vol.% Schaumpartikel, die Rohdichte liegt im Bereich von 600 bis 1100 kg/m³.

Zur Herstellung der Leicht- und Dämmputze werden die Schaumstoffzuschläge, die hydraulischen Bindemittel und die sonstigen Zusätze gleichmäßig vermischt und dann abgepackt. An der Baustelle wird die Trockenmischung mit Wasser aufbereitet und verarbeitet.

Im allgemeinen werden die Schaumpolystyrolzuschläge in Form von sehr leichten Partikeln verwendet. Aufgrund der starken Dichteunterschiede neigt die Trockenmischung zum Separieren des Leichtzuschlags, so dass eine gleichmäßige Bindemittelverteilung nicht möglich ist und somit störende Rohdichte- und Festigkeitsschwankungen auftreten.

Der Erfindung lag also die Aufgabe zugrunde, diese Entmischung zu unterdrücken. Diese Aufgabe wird erfindungsgemäß dadurch gelöst, daß das Bindemittel vor oder nach dem Vermischen mit den Schaumpolystyrol-Partikeln auf Temperaturen oberhalb von 50°C erhitzt wird.

Bei der ersten Ausführungsform der Erfindung wird das Bindemittel auf Temperaturen von 50 bis 300°C, vorzugsweise von 60 bis 150°C vorgewärmt und dann warm mit den Schaumpolystyrol-Partikeln vermischt. Das Vorwärmen wird in beheizten Mischaggregaten, beispielsweise in beheizten Schneckenmischern oder Taumelmischern oder in Drehrohrhöfen vorgenommen. Es versteht sich von selbst, daß das Bindemittel in den Mischern solange bewegt werden muß, bis es ganz durchgewärmt ist. Dies kann je nach der Menge einige Minuten bis mehrere Stunden dauern. Anschließend wird das Bindemittel dann in erwärmtem Zustand mit den Schaumpartikeln - vorzugsweise durch Auftrommeln - vermischt.

Bei der anderen - bevorzugten - Ausführungsform wird die fertige Trockenmischung bei 50 bis 100°C, vorzugsweise bie 60 bis 90°C wenige Minuten bis einige Stunden, vorzugsweise eine bis vier Stunden lang getempert. Es versteht sich von selbst, daß bei hohen Temperaturen eine kurze Behandlungszeit ausreicht und umgekehrt. Das Tempern kann in Silos, die von unten nach oben mit heißer Luft durchströmt sind, oder in Drehrohröfen durchgeführt werden.

Die Schaumpolystyrol-Partikel sind vorgeschäumte Partikel mit einer Schüttdichte von 5 bis 20, vorzugsweise 7 bis 15 g·1⁻¹ und einer mittleren Partikelgröße von 0,5 bis 3, vorzugsweise 1 bis 2 mm. Sie können die üblichen Zusatzstoffe enthalten, insbesondere Flammschutzmittel, Hexabromcyclododecan sowie athermane Materialien zur Verminderung der Wärmeleitfähigkeit, wie Graphit oder Ruß.

Diese Schaumpartikel werden mit den üblichen hydraulischen Bindemitteln, wie Zement, Kalk und ggf. Sand in üblichen Schaufelmischern gemischt und an der Baustelle mit Wasser angerührt.

Es hat sich überraschenderweise gezeigt, daß bei den erfindungsgemäß hergestellten Leicht- und Dämmputzen keine Separation von Schaumpartikeln und Bindemittel eintritt.

## Patentansprüche

1. Verfahren zur Herstellung von wärmedämmendem Leicht- und Dämmputz durch Vermischen von hydraulischen Bindemitteln und Schaumpolystyrol-Partikel, **dadurch gekennzeichnet, dass** die Bindemittel vor oder nach dem Vermischen mit den Schaumpolystyrol-Partikeln auf Temperaturen oberhalb von 50°C erhitzt werden.

2. Verfahren nach Anspruch 1, **dadurch gekennzeichnet, daß** die Trockenmischung bei Temperaturen von 50 bis 100°C wenige Minuten bis einige Stunden lang getempert wird.

3. Verfahren nach Anspruch 1, **dadurch gekennzeichnet, daß** das Bindemittel auf Temperaturen zwischen 50 und 300°C vorgewärmt und dann warm mit den Schaumpolystyrol-Partikeln vermischt wird.
